(19) **Europäisches Patentamt**
**European Patent Office**
**Office européen des brevets**

(11) **EP 1 801 812 A2**

(12) **EUROPÄISCHE PATENTANMELDUNG**

(43) Veröffentlichungstag:
**27.06.2007  Patentblatt 2007/26**

(51) Int Cl.:
***G21B 1/13*** *(2006.01)*

(21) Anmeldenummer: **06026376.1**

(22) Anmeldetag: **20.12.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **23.12.2005  AT  88605 U**

(71) Anmelder: **PLANSEE SE**
**6600 Reutte (DE)**

(72) Erfinder:
 • **Schedler, Bertram**
  **6600 Reutte (AT)**

 • **Scheiber, Karlheinz**
  **6600 Breitenwang (AT)**
 • **Friedle, Hans-Dieter**
  **6651 Häselgehr (AT)**
 • **Huber, Thomas**
  **6600 Breitenwang (AT)**
 • **Schedle, Thomas**
  **6600 Reutte (AT)**
 • **Mair, Sandra**
  **6600 Reutte (AT)**
 • **Zabernig, Anton**
  **6600 Reutte (AT)**
 • **Friedrich, Thomas**
  **87642 Halblech (DE)**
 • **Wörle, Nadine**
  **6600 Musau (DE)**

(54) **Wärmesenke aus einer Kupferlegierung**

(57)    Die Erfindung betrifft eine Erste-Wand-Komponente eines Fusionsreaktors, die zumindest einen Hitzeschild aus einem Werkstoff der Gruppe grafitischer Werkstoff, karbidischer Werkstoff, Wolfram, Wolframlegierung und eine Wärmesenke aus einer Kupferlegierung umfasst, wobei die Wärmesenke aus einer sprühkompaktierten Kupferlegierung besteht.

EP 1 801 812 A2

**Beschreibung**

Die Erfindung betrifft eine Erste-Wand-Komponente eines Fusionsreaktors, die zumindest einen Hitzeschild aus einem Werkstoff der Gruppe grafitischer Werkstoff, karbidischer Werkstoff, Wolfram, Wolframlegierung und eine Wärmesenke aus einer Kupferlegierung umfasst.

Ein typisches Beispiel für den Einsatz derartiger Erste-Wand-Komponenten sind Divertor und Limiter, die höchsten thermischen Belastungen von über 10 MW/m$^2$ ausgesetzt sind. Erste-Wand-Komponenten bestehen üblicherweise aus einem Hitzeschild und einem Wärme abführenden Bereich. Der Werkstoff des Hitzeschildes muss mit dem Plasma kompatibel sein, eine hohe Resistenz gegenüber physikalischem und chemischem Sputtern aufweisen, einen hohen Schmelzpunkt / Sublimationspunkt besitzen und gegenüber Thermoschock möglichst beständig sein. Daneben muss er noch eine hohe thermische Leitfähigkeit, geringe Neutronen-Aktivierbarkeit und ausreichende Festigkeit / Bruchzähigkeit aufweisen, bei guter Verfügbarkeit und akzeptablen Kosten. Neben Wolfram erfüllen grafitische und karbidische Werkstoffe dieses vielfältige und zum Teil gegenläufige Anforderungsprofil am besten. Da die Energieströme aus dem Plasma über einen längeren Zeitraum auf diese Komponenten einwirken, werden derartige Erste-Wand-Komponenten typischerweise aktiv gekühlt. Die Wärmeabfuhr wird durch eine Wärmesenke aus einer Kupferlegierung unterstützt, die mit dem Hitzeschild üblicherweise stoffschlüssig verbunden ist.
Um Spannungen, die aus dem unterschiedlichen Wärmeausdehnungsverhalten von Hitzeschild und Wärmesenke resultieren, durch plastische Verformung zu reduzieren, wird im Falle, dass die Wärmesenke aus einer hochfesten Kupferlegierung, z.B. Cu-Cr-Zr, besteht, das Hitzeschild über eine Reinkupfer-Zwischenlage mit der Wärmesenke verbunden. Die Reinkupfer-Zwischenlage hat dabei üblicherweise eine Stärke von 0,5 bis 3 mm.

Erste-Wand-Komponenten können mit unterschiedlichem Design ausgeführt werden. Es wird dabei zwischen Fiachziegel-, Sattel- und Monoblock-Design unterschieden. Wird ein Hitzeschild mit planer Verbindungsfläche mit der Kühlmittel-durchflossenen Wärmesenke verbunden, spricht man von einem Flachziegel-Design. Beim Sattel-Design wird ein Hitzeschild mit halbkreisförmiger Ausnehmung mit einer rohrförmig ausgeführten Wärmesenke verbunden. Die Wärmesenke hat dabei jeweils die Funktion, den thermischen Kontakt zwischen der Wärmeeintragseite und dem Kühlmedium herzustellen und ist dabei zyklischen, thermisch induzierten Lasten ausgesetzt, die sich aus dem Temperaturgradienten und den unterschiedlichen Ausdehnungskoeffizienten der Fügepartner ergeben. Beim Monoblock-Design besteht die Erste-Wand-Komponente aus einem Hitzeschild mit konzentrischer Durchführung. Über diese konzentrische Durchführung ist der Hitzeschild mit einem Kühlrohr verbunden. Neben dem Hitzeschild und der Wärmesenke können Erste-Wand-Komponenten auch weitere Bereiche /Teile, z.B. Anschlussrohre aus Stahl, umfassen.

Erste-Wand-Komponenten müssen nicht nur thermisch induzierte, sondern auch zusätzlich auftretende mechanische Spannungen ertragen. Solche zusätzlichen, mechanischen Lasten können über elektromagnetisch induzierte Ströme erzeugt werden, die in den Komponenten fließen und mit dem Magnetfeld der Umgebung in Wechselwirkung treten. Dabei können hochfrequente Beschleunigungskräfte auftreten, die vom Hitzeschild, bzw. auch von der Fügezone Hitzeschild / Wärmesenke übertragen werden müssen.

Der Fügebereich zwischen Grafit und Kupfer stellt dabei den Schwachpunkt derartiger Werkstoffverbunde dar. Ein Verfahren zur Herstellung von Kühleinrichtungen mit verbesserter Festigkeit im Fügebereich wird in der EP 0 663 670 B1 beschrieben. Dabei wird Kupfer in schmelzflüssigem Zustand mit dem Hitzeschild in Kontakt gebracht, wobei während des Verbindungsvorganges im Fügebereich Anteile von einem oder mehreren Metallen der IV, und/oder V. Nebengruppe des Periodensystems bereitgestellt werden. Nach der Erstarrung und der Bearbeitung der erstarrten Kupferlage wird diese, beispielsweise durch einen HIP oder Lötprozess mit der Wärmesenke verbunden. Auch Strahlschweißverfahren können zum Einsatz kommen.

Fehler in Fügezone sind jedoch auf Grund der geometrischen Gegebenheiten und der verwendeten Werkstoffkombinationen nur mit entsprechendem Aufwand detektierbar. Für Erste-Wand-Komponenten kommen dabei Ultraschall-Prüfverfahren zum Einsatz, Bei Stand-der-Technik Komponenten ergibt sich bei der Ultraschallprüfung die Schwierigkeit, dass bei der für diese Anwendung erforderlichen Auflöse-Genauigkeit die bis dato für die Wärmesenke eingesetzten Werkstoffe eine lokal zu stark differierende Schalischwächung aufweisen.
Bei der dabei verwendeten Impuls-Echo- Methode wird die von einem Fehler reflektierte Schallamplitude als Maß für die Fehlergröße herangezogen. Bei den derzeit verwendeten Werkstoffen und den für die Anwendung in der Kernfusion vorgegebenen kritischen Fehlergrößen ist es nicht möglich, eindeutig zu unterscheiden, welche Intensität vom Fehler kommt und welche Anteile vom Material der Wärmesenke absorbiert wurden. Daher kann aus dem Amplitudensignal keine sichere Aussage über die Fehlergröße im Bereich der Fügezone getroffen werden. Dies wirft vor dem Hintergrund einer nuklearen Umgebung für solche Komponenten entsprechende Probleme auf, vor allem auch deshalb, weil Risse / Ablösungen als möglicher Auslöser für einen größeren Störfall gesehen werden.

Es ist daher vor dem Fügeprozess die Schalischwächungscharakteristik der Wärmesenke aufzunehmen. Nach dem Fügeprozess wird wiederum die Intensität des Fehlersignals bestimmt und davon die Schallschwächungscharakteristik der Wärmesenke subtrahiert. Die daraus resultierende Amplitudenhöhe korreliert mit der Fehlergröße im Bereich der Fügezone. Diese Prüfmethode ist aufwendig und anfällig für eine fehlerhafte Interpretation der Messergebnisse. Trotz jahrelanger aufwendiger Entwicklungstätigkeit auf dem Gebiet von Erste-Wand-Komponenten erfüllen die bis dato vorliegenden Bauteile das Anforderungsprofil in Bezug auf zerstörungsfreie Prüfbarkeit in nicht in optimaler Weise.

Aufgabe der Erfindung ist es daher eine Erste-Wand-Komponente bereit zu stellen, die in einfacher Weise zerstörungsfrei prüfbar ist.

Gelöst wird diese Aufgabe gemäß den Merkmalen von Anspruch 1.

Bei Verwendung von Wärmesenken aus sprühkompaktierten Kupfenegierungen tritt eine unterschiedliche Schallschwächung nicht auf.

Sprühkompaktieren ist eine Methode zur Herstellung von metallischen Halbzeugen. Dabei wird eine Schmelze über den Zwischenschritt Zerstäubung in den festen Zustand übergeführt und gleichzeitig eine kompakte Vorform erzeugt. Diese Vorform ist ein Bolzen, der mit konventionellen Umformverfahren weiterverarbeitet wird. Sprühkompaktieren ist ein Verfahren, welches zwischen Pulvermetallurgie und Stranggguss eingeordnet wird.

Es hat sich nun gezeigt, dass bei Verwendung von sprühkompaktierten Kupferlegierungen die lokalen Schallschwächungen im Werkstoff derart homogen sind, dass auf eine Aufnahme eines Schallschwächungsdiagrammes verzichtet werden kann. Es erweist sich dabei als günstig, wenn die mittlere Korngröße der Kupferlegierung < 50 $\mu$m beträgt. Weiters ist auch eine enge Korngrößenverteilung der Kupferlegierung vorteilhaft. Der $d_{50}$ und $d_{90}$ Wert erfüllen dabei folgende Beziehung: $d_{90} < 3$ x $d_{50}$. Unter $d_{90}$ versteht man dabei jenen Komdurchmesser, den 90% der Körner nicht überschreiten. Analog versteht man unter $d_{50}$ jenen Komdurchmesser, den 50% der Körner nicht überschreiten.

Auch bei Verwendung von sprühkompaktierten Kupferlegierungen erweist es sich als vorteilhaft, wenn diese ausscheidungshärtbar sind, wie dies beispielsweise bei Cu-Cr-Zr-Legierungen (DIN EN 2.1293) der Fall ist. Der typische Chromgehalt liegt dabei zwischen 0,3 und 1,2 Gew.%, der Zirkongehalt bei 0,03 bis 0,3 Gew.%, Rest Cu und typische Verunreinigungen.

Wie bereits erwähnt, werden die sprühkompaktierten Bolzen mittels konventioneller Umformverfahren wie Strangpressen oder Walzen weiterverarbeitet. Um eine ausreichende Homogenität des Ultraschallbildes zu erzielen, ist es weiters günstig, wenn der Umformgrad > 70 % beträgt. Mit der erfindungsgemäßen Wärmesenke lassen sich sowohl Erste-Wand-Komponenten in Monoblock-, als auch in Flachziegel-Version herstellen. Da die erfindungsgemäße Wärmesenke aufgrund der Kornfeinheit und auch der gewählten Legierungselemente eine hohe Festigkeit aufweist, ist es vorteilhaft, wenn zwischen Wärmesenke und Hitzeschild eine Zwischenschicht aus reinem Kupfer angeordnet ist, die dem Spannungsabbau durch plastische Verformung dient.

Neben dem Vorteil der einfacheren und sicheren zerstörungsfreien Prüfung im Bereich der Fügezone sind die sprühkompaktierten Kupferlegierungen auch äußerst gefügestabil. So rekristallisieren sprühkompaktierte Cu-Cr-Zr-Legierungen erst bei Temperaturen, die in etwa der Lösungsglühtemperatur entsprechen. Diese Gefügestabilität ist insofern von besonderer Bedeutung, da die erforderlichen Temperaturen für eine stoffschlüssige Verbindung zwischen Hitzeschild und Wärmesenke im Bereich von typischerweise 700°C bis 1000°C liegen. Während bei schmelzmetallurgisch hergestellten Wärmesenken dies zu Rekristallisation und Kornvergröberung führt, was insbesondere bei dünnwandigen, druckführenden Bauteilen äußerst kritisch ist, wird eine Gefügeänderung bei sprühkompaktiertem Material vermieden.

Im Folgenden wird die Erfindung durch ein Beispiel näher beschrieben.

Beispiel

Zur Herstellung einer Erste-Wand-Komponente kam eine Cu-Cr-Zr-Legierung mit einem Chromgehalt von 0,8 Gew.%, einem Zirkongehalt von 0,15 Gew.%, Rest Kupfer und Verunreinigungen zur Anwendung. Die Herstellung der Kupferlegierung umfasste dabei folgende Schritte:

Zunächst wurde die Cu-Cr-Zr-Legierung induktiv erschmolzen. Die Schmelze wurde mittels Stickstoff in einer Atomisierungsdüse zu Tröpfchen mit einem Durchmesser von ca. 75 $\mu$m verdüst. Die Flugdistanz der Tröpfchen von der Atomisierungsdüse zum Stubstrathalter wurde so gewählt, dass sich die Tröpfchen beim Auftreffen auf dem Substrathalter in einem Zustand zwischen Solidustemperatur und Liquidustemperatur befanden. Auf dem Substrathalter baute sich dadurch ein Bolzen mit einem Durchmesser von ca. 470 mm auf. Die durchschnittliche Korngröße des Bolzens betrug dabei 100 $\mu$m. Durch die hohe Abkühlgeschwindigkeit wurde eine dentritische Struktur und Segregation in den interdentritischen Räumen vermieden. Die Weiterverarbeitung des Bolzens erfolgte durch Strangpressen und Walzen, Der Querschnitt der gewalzten Stange, die auf eine Stücklänge von 500 mm zugeschnitten wurde, betrug 30 x 65 mm. Die Untersuchung der Korngröße erbrachte eine mittlere Korngröße von 30 $\mu$m, 90 % der Körner wiesen dabei eine Korngröße < 70 $\mu$m auf. Im Gegensatz zu schmelzmetallurgisch hergestellten Werkstoffen zeigte die an dieser Cu-Cr-Zr Stange durchgeführte Ultraschalluntersuchung zur Ermittlung der Schallschwächungscharakteristik eine homogene Schallschwächung im untersuchten Volumen. Auf diese Stange wurde anschließend eine 2 mm dicke Platte (65 x 500 mm) Reinkupfer aufgelegt. Der so erhaltene Zusammenbau wurde in einer Stahlkanne positioniert. Die Kanne wurde durch WIG-Scffweißen versiegelt, nach dem Versiegeln evakuiert und gasdicht verschlossen. Anschließend wurde ein heißisostatischer Pressvorgang bei 1000°C und 1000 bar durchgeführt, wodurch sich eine fehlerfreie, stoffschlüssige Verbindung zwischen der Reinkupferplatte und dem sprühkompaktierten Cu-Cr-Zr-Stab ausbildete. Zur Überprüfung der Fehlernachweisgrenze wurden auf der Rein-Kupferseite Flachbohrungen im Durchmesserbereich zwischen 2 und 10 mm sowie quer verlaufende Schlitze mit Schlitzweiten ebenfalls zwischen 2 und 10 mm eingebracht. Sowohl die Bohrungen als auch die Querschlitze reichten bis zur Fügezone Rein-Cu / Cu-Cr-Zr. Sie stellen damit typische mögliche Fehler dar. Bei der nachfolgenden Ultraschalluntersuchung konnten sämtliche eingebrachten Fehler klar nachgewiesen werden, ohne die zuvor aufgenommene Schallschwächungscharakteristik zur Fehlerbeurteilung heranziehen zu müssen.

Für die Ultraschallpnifung wurde der Verbundkörper von der Cu-Cr-Zr-Seite in Richtung der Fügezone über die Dicke von 30 mm mit der Impuls-Echo-Methode durchschallt. Diese Prüfung wurde mittels Tauchtechnikverfahren durchgeführt. Folgende Verfahrensparameter wurden gewählt:

    Prüffrequenz: 5 MHz
    Prüfkopf: Harisonic- 13-0506-R
    Schwingungsdurchmesser: 0,375"
    Fokussierung: 2" SPM

Eine nachfolgend durchgeführte metallografische Untersuchung zeigte, dass sich praktisch keine Gefügeänderung im Vergleich zum Ausgangszustand ergeben hat.

**Patentansprüche**

1. Erste-Wand-Komponente eines Fusionsreaktors, die zumindest einen Hitzeschild aus einem Werkstoff der Gruppe grafitischer Werkstoff, karbidischer Werkstoff, Wolfram, Wolframlegierung und eine Wärmesenke aus einer Kupferlegierung umfasst, **dadurch gekennzeichnet,**
dass die Wärmesenke aus einer sprühkompaktierten Kupferlegierung besteht.

2. Erste-Wand-Komponente nach Anspruch 1, **dadurch gekennzeichnet, dass** die Kupferlegierung eine mittlere Korngröße < 50 $\mu$m aufweist.

3. Erste-Wand-Komponente nach Anspruch 1 oder 2, **dadurch gekennzeichnet, dass** der $d_{90}$ und der $d_{50}$ Wert der Komgrößenverteilung der Kupferlegierung folgende Beziehung erfüllen:

$$d_{90} < 3 \times d_{50} \, .$$

4. Erste-Wand-Komponente nach einem der Ansprüche 1 bis 3, **dadurch gekennzeichnet, dass** die Kupferlegierung ausscheidungshärtbar ist.

5. Erste-Wand-Komponente nach Anspruch 4, **dadurch gekennzeichnet, dass** die Kupferlegierung aus 0,3 bis 1,2 Gew.% Cr, 0,03 bis 0,3 Gew.% Zr, Rest Cu und übliche Verunreinigungen besteht.

6. Erste-Wand-Komponente nach einem der Ansprüche 1 bis 5, **dadurch gekennzeichnet, dass** die Kupferlegierung einen Umformgrad von größer 70% aufweist.

7. Erste-Wand-Komponente nach einem der Ansprüche 1 bis 6, **dadurch gekennzeichnet, dass** zwischen Wärmesenke und Hitzeschild eine Zwischenschicht aus Rein-Kupfer angeordnet ist.

8. Erste-Wand-Komponente nach einem der Ansprüche 1 bis 7, **dadurch gekennzeichnet, dass** die Erste-Wand-Komponente in Monoblock Bauweise oder als Flachziegel ausgeführt ist.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0663670 B1